# EUROPEAN PATENT APPLICATION

(11) **EP 4 827 123 A1**
(43) Date of publication of application: **21.10.2026**
(21) Application number: 25425018.6
(22) Date of filing: 14.04.2025
(51) Int. Cl.: H04W 4/021, H04W 4/80, G06F 1/26, H02J 7/35, H04W 52/02, H04W 84/18, H04W 88/04, H05K 5/06

(54) **AUTONOMOUS INFORMATION DEVICE FOR THE OFFLINE DISTRIBUTION OF DIGITAL CONTENT**

(71) Applicant: Bordato, Alessandro, 38059 Castel Ivano (TN) (IT)
(72) Inventor: Bordato, Alessandro, 38059 Castel Ivano (TN) (IT)

(57) **Abstract**

The invention relates to an autonomous information device capable of distributing preloaded digital content to nearby users in environments where internet and/or electrical connectivity is partial, difficult, absent or unstable.

The device includes a system for managing, generating and storing energy (e.g. solar panel and batteries), a microcontroller or microprocessor with wireless communication capabilities (Wi-Fi, Bluetooth), and a memory module containing multimedia information.

Users can access the content via their mobile devices without the need for an internet connection, simply by scanning a QR code. The system supports OTA updates, modular component detection, mesh networking and energy-efficient operation.

## Description

### 2. Technical field

The present invention relates to an information device, consisting of a power supply system comprising a solar panel and/or an external source connected via a male/female connector with IP68 protection, a sealed enclosure containing a multi-voltage power manager with an energy storage system and related control, and a system controlled by a microcontroller or microprocessor equipped with Wi-Fi, Bluetooth, and a storage medium containing data that can be accessed.

The system allows simultaneous access to various types of digital content by multiple users, through mobile devices equipped with Wi-Fi, Bluetooth, or other technologies, in situations where internet and/or electrical connectivity is partial, difficult, absent, or unstable.

### 3. Background art

Currently, the market already offers a wide variety of devices (for example, totems or access points with pre-stored web pages), designed for various purposes: tourist information, internet access points, reservation systems. The limitation of these devices is that they require an internet and/or electrical connection to function.

As a result, such devices become unusable in environments lacking network infrastructure, such as (but not limited to) high mountain areas. Even in the rare cases where devices currently on the market allow access to digital information without a connection to the power grid, they are still bulky in size.

### 4. Summary of the Invention

The present invention has been developed to overcome the limitations of existing devices currently available on the market, offering any mobile device (such as smartphones, tablets, etc.) the possibility to connect via Wi-Fi or Bluetooth and display on their screen preloaded audiovisual informational content stored within the device.

Access to the stored content occurs, for example, by scanning a QR code visible on the device, without requiring any connection to the internet or power grid.

The invention is particularly suitable for environments where internet and/or electrical connectivity is partial, difficult, absent or unstable, such as, for example, high mountain areas. In such situations, visitors often rely on traditional printed notice boards to obtain information about the surrounding area.

The proposed device, powered by solar energy, operates offline and internally integrates informational content specific to the installation context.

Any internet connection, including satellite, is used by the device to receive firmware or data updates, which can then be made available to the end user via low-energy, free technologies such as Wi-Fi or Bluetooth. The firmware, updatable remotely and/or by simply standing near the device without the need to connect cables-through OTA technology or similar-allows the system to be updated very quickly with a high level of security.

This mechanism may also include the use of cryptographic protocols to verify the integrity and security of updates before they are applied, thereby reducing the risk of tampering or errors. The content may also be updated locally or remotely, without the need for physical connections, through OTA or equivalent technologies.

The user can access the information by scanning the QR code with their own device, which will then access the offline web page directly. Thanks to this invention, it is possible to provide a smarter, more interactive and engaging experience to visitors of remote locations, offering them access to information without requiring an internet and/or power grid connection.

### The device, as conceived, features several distinctive characteristics:

Firstly, the device is designed to operate in an energy-autonomous way, using renewable or rechargeable sources and a multi-voltage energy manager with an energy storage system, contributing to the reduction of environmental impact.

Secondly, to provide users access to the digital informational content it contains, the device does not require any internet connection.

One version of the device is configured to operate in rechargeable mode, being fully autonomous even in the absence of a constantly connected power source, thanks to plug-and-play charging via cable and/or wireless.

Another feature is the absence of a monitor, combined with the presence of an energy storage system and, in the photovoltaic version, a small-sized solar panel, which makes the device very compact, allowing installation virtually anywhere, even in the most inaccessible places, while limiting its aesthetic, visual, and environmental impact.

Another feature is the possible presence in the device of a twilight sensor and/or a power on/off button and/or a presence sensor or other features aimed at extending the internal storage battery's duration.

Another feature is the presence of an intelligent multi-voltage energy manager inside the device, which manages the internal energy storage and the relative power supply of the electronics.

Another feature is that the connection between the present invention and users' mobile devices also occurs by scanning a QR code affixed to the device.

Another feature is that communication between users' mobile devices and the invention presented here occurs via Wi-Fi or Bluetooth, allowing easy connection with all types of mobile devices equipped with such technologies.

Another feature is that the digital informational content preloaded in this invention is displayed directly on the screens of users' mobile devices-even simultaneously by multiple users-since the invention itself is devoid of any display screen.

Another feature is that the informational contents stored inside the device consists, for example, of tourist guides related to the place being visited.

Another feature is that the informational contents stored inside the device consists of guides related to works of art viewed inside a museum, an open-air museum, a temporary exhibition, a church, a cathedral, a place of worship, a cultural site or similar.

Another feature is that the informational contents stored inside the device consists of guides related to monuments viewed in a square, street, or specific location.

Another feature is that the informational contents stored inside the device consists of tourist guides, maps and/or tourist and nature itineraries in multimedia format (text, audio, video).

Another feature is that the informational contents stored inside the device consists of useful information for various POIs (points of interest).

Another feature is that the device can send or receive beacons, for example to send messages, for proximity marketing, or to receive information from nearby devices.

The object of the present invention is to provide access to tourist guides, maps and/or tourist and nature trails, and other audiovisual information in general, in places where it would not be possible to provide them electronically due to partial, difficult, absent or unstable internet and/or electrical connectivity - all with low environmental impact.

### 5. Inventive step and technical contribution

Unlike known solutions, the invention described herein is not limited to the mere combination of a power source, a battery, and a Wi-Fi microcontroller, but introduces a coordinated set of innovative features that make it a complete, autonomous, and versatile system.

In particular, the intelligent energy management, the capability for secure remote updating (OTA), the active modularity with automatic detection of components, and the versatility of use even in harsh or infrastructure-lacking environments constitute the distinctive elements of the invention.

These features, coordinated by an advanced firmware logic, give the device an adaptive and intelligent behavior that is neither obvious nor derivable.

The ability to update the firmware remotely, without physical intervention or the need for a local network infrastructure, makes the invention particularly scalable even for large-scale projects, significantly enhancing its adoption in commercial, public, and industrial contexts.

### 6. Detailed description of embodiment

The device subject of the present invention, in its photovoltaic version, is composed of a very small photovoltaic panel (for example, 10 watts or more), which powers an energy storage system-such as a battery pack-that in turn stably powers a microcontroller (for example, an Espressif or others) or a microprocessor (for example, an ARM or others), with a clock speed that may range, for example, from a minimum of 80-400 MHz up to over 2.4 GHz, capable of parallel processing to handle multiple tasks simultaneously.

These tasks may include, for instance, Bluetooth connection, Wi-Fi connection in AP mode and/or mixed AP and STA mode to create mesh networks, or data processing for the delivery of content via services such as a web server, with content stored either on integrated memory (e.g., 16 MB and/or 16 GB flash module) or on a MicroSD, SSD, or other technologies (e.g., 16 GB or more), thereby increasing storage capacity; the microcontroller or microprocessor also has the ability to control external devices such as, for example, a dusk sensor, an activation button, or other elements such as a presence sensor, with extremely low energy consumption.

In "deep sleep" or standby mode, the system can remain functional for weeks or longer without discharging, until it is reactivated by an external event (such as a button, a sensor, or any mechanism that switches it to an "on" state); in its version equipped with a microcontroller, the device can transition from an off state to full operational status in a very short time-typically 1-3 seconds-becoming immediately ready for use as soon as an external event occurs, such as the activation of a beacon, the pressing of a button, sunrise (in the case of complete battery discharge, the energy storage system must reach the minimum voltage), or the presence of a nearby person.

In the photovoltaic version, the solar panel-coupled with a micro-perforated plate appropriately bent to form two 90° wings-is fixed to the enclosure with an inclination of, for example, 45° (the angle depends on the latitude of installation), using a through pin locked on one side by a larger diameter and on the other side by a locking mechanism, such as a padlock. In the version connected to an external power source, whether grid-based or alternative, the solar panel is replaced by a cover, for example made of aluminum, anchored to the enclosure in the same way.

The enclosure can be externally coated or finished with aesthetic and natural materials (e.g., wood, stone), while maintaining a resistant and waterproof internal structure. It may have dimensions such as, for example, a thickness of 4 mm, a cross-section of 12x12 cm, with a height of 30 cm on the long side and 18 cm on the short side. When assembled-using, for instance, aluminum-the device has a very low weight of approximately 5 kg and can be anchored, for example, to a pole, a rock, a wall, a buoy at sea, the deck of a ship or boat, or other supports via a C-shaped mounting plate with pre-drilled holes on the sides. It is secured with round-head bolts and square-neck carriage bolts that cannot be unscrewed from the outside, along with bolts or other fasteners on the bottom side that are accessible only from the inside.

The sealed enclosure containing the electronics has an IP68 protection rating, which is sufficient to ensure that the system, as engineered, can withstand temporary water pooling formed under snow in high mountain environments or continuous strong waves on the surface of both fresh and saltwater. The aluminum sealed enclosure is cooled by a dedicated aluminum heat sink installed on the side housing the energy storage unit, allowing for passive heat dissipation in the event of rising temperatures, without the use of fans.

Once assembled, the outer enclosure has a single access point located at the top, protected by a pass-through pin. Even in the event of damage to the photovoltaic panel or the upper cap, the pin still prevents unauthorized removal of the internal aluminum box containing the electronics.

Thanks to the dedicated in-line male and female connector, featuring threaded or quick coupling and a protection rating of at least IP68, the aluminum enclosure containing the electronics and the energy storage unit can be connected to any external power source.

The intelligent multi-voltage power manager, which controls the energy storage unit-such as an onboard battery pack-allows the device to regulate the use of stored energy in a smart manner, preventing the microcontroller or microprocessor from entering situations that would render it unstable and therefore unusable. Specifically, the system avoids conditions in which the voltage, although above the minimum threshold, is still insufficient to properly boot the device-a common issue when the battery pack is fully discharged. Furthermore, the intelligent power manager accepts multiple selectable input voltages, thereby allowing connection to various power sources.

The energy storage system enables the device to operate even when powered by sources other than the photovoltaic panel, in contexts where the main issue is not the availability of energy, but the lack of online connectivity. In such situations, the device ensures user access to informational content, for example through a local Wi-Fi connection.

For the photovoltaic version, on the side opposite to the solar panel, there is a plate positioned at an opposite inclination, designed to prevent the user from casting a shadow over the solar panel. On this plate, the QR code providing access to the information stored in the device via a web browser is engraved, along with instructions on how to connect to the device, for example through a Wi-Fi connection, and the geographical coordinates. In the version powered by an external source, the QR code and connection instructions can be engraved on the top cover or, for instance, on a separate support or plate placed near the enclosure housing the system.

The connection to the device via Wi-Fi and/or Bluetooth allows one or more users, even simultaneously, to access the information regardless of whether their device is connected to a data network or not..

In certain configurations, the devices can operate in mesh network mode, allowing simultaneous and cooperative connections between multiple nodes. Each unit is capable of automatically detecting nearby available mesh nodes and establishing stable connections with them.

The system is configured to dynamically select the most efficient path for data transmission between nodes, ensure redundancy in the event of failures or unexpected disconnections, and reduce overall network latency through optimized routing algorithms.

This configuration is particularly useful in large, remote, or distributed environments such as nature trails, parks, archaeological sites, or environmental monitoring networks. Support for standard mesh network protocols (e.g., Wi-Fi Mesh, ZigBee Mesh) or custom implementations allows for flexibility and scalability depending on the type of application.

Thanks to the coupling connector and the intelligent multi-voltage power manager, the device can be connected to an external charging module, which enables the restoration of energy autonomy through compatible power supplies, power banks, or wireless charging systems. This makes it possible to use the device even in contexts where no renewable energy source, electrical grid, or external generator is available.

The possibility of updating the system via OTA (Over-The-Air) connection-through Wi-Fi, Bluetooth, satellite connection and/or modems such as GPRS, LTE, 4G, 5G or other types of connections-makes the system scalable in terms of both firmware and content updates. The system enables remote and centralized updates of firmware and content, also with differentiated logic based on groups of devices, geographical areas, or managing entities. By way of example and without limitation, all devices belonging to a given group can be updated, both in terms of firmware and content, by a leader device or delegated units, restricting the update exclusively to devices within that group. Firmware updates can occur either automatically or manually, depending on the selected configuration, through periodic online checks for new versions or offline using a nearby physical device.

The device is equipped with an advanced modular firmware management system, designed to automatically detect the connected hardware components and dynamically adapt the system's behavior based on the detected configuration.

Specifically, the firmware is divided into functional modules that can be enabled or disabled depending on the presence of:
- environmental sensors (e.g., weather sensors, people counters, etc.)
- external communication modules (e.g., Bluetooth, LoRa, ZigBee, satellite)
- additional memory units (e.g., microSD)
- alternative or rechargeable power supply systems.

At startup, the system performs an auto-detection procedure of the connected modules and selectively loads only the relevant software components, thereby optimizing hardware resources and reducing power consumption.

Such a modular architecture also enables selective updates of individual modules via OTA, avoiding the need to reload the entire firmware in the event of partial modifications.

In the version equipped with environmental sensors (e.g., weather sensors), the device is configured to detect and transmit the acquired data both offline and remotely, in the case of models featuring an integrated online module, thus allowing precise and geolocated monitoring of the territory (e.g., temperature, humidity, atmospheric pressure).

### 7. Possible Industrial Applications

Wi-Fi connectivity enables users to access information in contexts where the internet and/or power grid connection is partial, difficult, absent, or unstable, making the device ideal for use in:
- **Sites of historical,** tourist, naturalistic and/or scenic interest, nature trails and bike paths, especially where internet and/or electrical network access is not feasible (for example, in high mountain areas to provide information along hiking paths and/or historic war routes. Alternatively, thanks to its IP68 rating and its construction in marine-grade corrosion-resistant aluminum, it can be used to assist cruise or ferry passengers disembarking at ports or docks by providing them with information. It can also be used in lake areas, protected nature reserves, along routes or places of historical-cultural or religious interest, or in industry fairs, either permanent or temporary, promotional desks for businesses and territories, or in exhibitions-including distributed ones-through temporary installations along high-traffic paths, etc.).
- **Natural parks and/or protected reserves,** where it can provide tourist information without disturbing the natural environment.
- **Remote construction sites,** where workers can access technical manuals and/or operational instructions without the need for connectivity.
- **Any scenario where the device can send or receive beacons,** for example, to deliver messages, enable proximity marketing, or retrieve data from nearby devices.
- **Emergency situations** that may arise (e.g., along high-altitude mountain trails or in areas affected by natural disasters), where knowing the exact geographic coordinates and/or accessing life-saving information can be crucial.
- The rechargeable version ensures operability even in the absence of sunlight or in environments not served by the electrical grid, such as during bad weather or in remote locations. For example, this version can be used indoors where power outlets are not accessible, such as places of worship, temporary exhibitions, or areas subject to power outages, ensuring operational continuity even with mobile or intermittent energy sources. Another example is the ability to provide continuous information or support in the event of natural disasters, temporary fairs, or inclement weather, without needing a constant energy supply-even at night or without sunlight-by connecting any temporary energy system compatible with the multi-voltage manager. In this configuration, the system becomes a mobile, autonomous, and rechargeable information point; deployable anywhere, either temporarily or as a permanent installation.
- **The version equipped with environmental sensors** (e.g., weather sensors), with or without an integrated camera and/or a people-counting system, is configured to acquire, locally store, and transmit online meteorological data, environmental monitoring parameters, images, and/or videos. Such data can subsequently be downloaded by the operator or viewed by the user on their own device. **The control unit is also capable of collecting a wide range of information** depending on the sensors installed and of actively interacting with the surrounding environment through the onboard devices.

The applications listed above are not to be considered exhaustive. The device can in fact be employed **anywhere there is a need to distribute digital content in an autonomous and resilient manner,** including contexts that are not yet foreseeable at the time of filing.

### 8. Compared to the prior art, the device introduces significant advantages:

- The adoption of an advanced energy management logic makes it possible to avoid initialization errors caused by insufficient startup voltage, thus ensuring greater operational reliability even in the event of a complete discharge of the energy storage unit (or other types of storage). In fact, when the initial voltage is too low to support full operation but high enough to activate the system, the device would enter a limbo state from which it could only recover by physically restarting the system.
   "Physical restart" refers to the need to manually disconnect and reconnect the power cable and/or press a hardware reset button. This becomes necessary in cases where, due to a voltage that is too low, the system is unable to complete firmware loading, thereby preventing any intervention via software reboot.
   Without such intelligent energy management, manual intervention would be required to restart the system. In devices powered by renewable sources, such as a photovoltaic panel, restoring operability would require waiting for a complete new discharge cycle, which- under prolonged bad weather conditions-could result in system inactivity for an indefinite period of time.
   In contrast, in rechargeable device configurations, the system allows the external recharge to be connected without concern for the internal charge status, as everything is managed by the intelligent multi-voltage energy manager.
- Compliance with IP68 standards and the use of corrosion-resistant materials allow the device to be employed in particularly harsh environments, including, for example, alpine or marine contexts, while preserving its functionality over time.
- The ability to operate offline via Wi-Fi and to host information on expandable memory provides greater flexibility compared to devices that rely on internet connectivity.
- The possibility to update the system via OTA connection-whether through Wi-Fi, Bluetooth, satellite, or modems compatible with GPRS, LTE, 4G, 5G, and next-generation technologies-makes the system scalable in terms of both firmware and content updates. This includes, for instance, updating multiple devices simultaneously across different geographic locations, remotely updating user-accessible content, or-particularly for completely offline devices-updating the system or content without the need for physical connections.
- The ability to create mesh networks when needed. This means that each device can communicate directly with any other device in the network; furthermore, mesh networks can be easily scaled to add new devices and can continue to function even if some devices are disconnected or damaged.
- Additionally, the modular and lightweight design facilitates transportation, installation, and maintenance, further enhancing ease of use.
- The version equipped with "weather" sensors enables continuous environmental monitoring with data concerning, for example, air, water, soil, temperature, humidity, wind, landscape images, people counters, and much more depending on the installed sensors-thus allowing active interaction with the environment by the user and/or the operator.

## Claims

1. **Autonomous device for the digital dissemination of information, characterized by**:
• an energy generation system, comprising a photovoltaic panel for the photovoltaic version and/or, for other versions, an alternative autonomous power source and/or an external power supply and/or a portable charging system;
• an intelligent multi-voltage power manager that controls the internal energy storage and the corresponding power supply to the electronic components;
• a central electronic unit comprising at least a microcontroller or a microprocessor or both, equipped with wireless connectivity configured to provide access to pre-stored informational content and/or Bluetooth connectivity configured, for example, to send or receive "beacon messages" for proximity marketing or to actively interact with nearby devices;
• a data storage system configured to store and make informational content accessible via mobile devices without requiring connection to the internet;
• a protective enclosure designed to ensure device operation under harsh environmental conditions, such as, but not limited to, exposure to dust, humidity, rain, snow, temporary submersion, and extreme temperatures.

2. Device according to claim 1, wherein the energy generation system comprises, for the photovoltaic version, a photovoltaic panel with a specific inclination based on the geographical location or environmental conditions.

3. Device according to claim 1, wherein the energy storage system comprises a multi-voltage intelligent power manager with energy control and optimization functionality, associated, for example, with a storage unit such as a battery pack.

4. Device according to claim 1, wherein the central electronic unit is configured to:
• provide Wi-Fi and/or Bluetooth connectivity;
• handle multiple simultaneous connections from mobile devices;
• process the data stored in non-volatile memory through an integrated web server;
• present a user interface configured to deliver interactive or multimedia content;
• operate in low-power or standby mode with very low energy consumption and, in the version with microcontroller, automatically wake up in less than 1-3 seconds upon detection of an external event.

5. Device according to claim 1, wherein the protective enclosure is made of thermally conductive material and includes a passive heat sink for cooling the internal components, compliant with at least IP68 standard to ensure resistance to dust, temporary water immersion, and extreme temperatures.

6. Device according to claim 1, wherein the update system is configured to operate over-the-air (OTA) via Wi-Fi, Bluetooth, satellite connections, or through GPRS, 4G, 5G LTE modems, or equivalent future communication technologies.

7. Device according to claim 1, wherein access to informational content is facilitated by:
• a QR code positioned on the protective enclosure, or otherwise within the range of the Wi-Fi signal, to enable access to the network in access point (AP) mode or, in the case of mesh networks, also in wider areas covered by the system;
• instructions directly visible through the device's user interface.

8. Device according to claim 1, wherein the design is configured to minimize environmental impact by incorporating recyclable materials and optimized energy efficiency.

9. Device according to claim 1, wherein the system is configured to be powered also by external energy sources, such as external batteries, mobile generators, conventional electrical grid, or other sources not yet foreseeable at the time of filing.

10. Device according to claim 1, **characterized by** an advanced and modular firmware management system, which allows to:
• automatically detect the addition or replacement of components, activating configuration parameters in the software interface and adding or removing the corresponding data in the user interface;
• optimize operational parameters based on the installed and activated modules, adjusting energy consumption and resource allocation according also to operator-defined settings;
• support expansion with compatible modules, thanks to the device's modularity, by selecting for instance among:
∘ data storage modules with various capacities and different storage technologies;
∘ various types of sensors, including interactive sensors and/or sensors for monitoring internal and external environmental conditions, configured to dynamically adjust the device's functionality, both in the weather-sensor-enabled version and in alternative configurations with sensors dedicated to other specific uses;
∘ image and/or audio and/or video capture modules;
∘ people counter modules;
∘ communication systems compatible with alternative protocols, including Bluetooth, LoRa, ZigBee, GPRS, 4G LTE, 5G, satellite communications, as well as new or future-generation technologies.

11. Device according to claim 1, **characterized by** the presence of an in-line male and female connector, with threaded or quick coupling and a protection rating of at least IP68, configured to allow the replacement or integration of energy generation components, including additional photovoltaic panels and alternative generators, enabling connection to any compatible energy source.

12. Device according to claim 1, **characterized by** a also remotely operable over-the-air (OTA) update system, configured to:
• download and install firmware and/or data updates, also separately, in manual, automatic and/or scheduled mode, without requiring a physical connection, via Wi-Fi, Bluetooth, mobile networks (e.g., GPRS, 4G, 5G, LTE), satellite connection or other communication technologies that may be developed in the future;
• verify the integrity and security of updates through advanced cryptographic protocols before installation.

13. Device according to claim 1, wherein the intelligent energy management allows an extended operational lifespan compared to traditional devices and ensures, through a dedicated system, the prevention of faulty startups caused by minimum voltage conditions, which frequently occur in the event of a complete discharge of the energy storage system.
This management also enables the use of rechargeable versions of the device without the need for a permanent connection to external energy sources, whether renewable or not, avoiding manual intervention in case of complete discharge thanks to the action of the energy manager. The dedicated control system ensures continuous optimization of energy management and monitoring of power supply conditions.

14. Device according to claim 1, **characterized, in** the models equipped with this option, by the presence-on the external enclosure and optionally also within the digital interfaces displayed - of the geographical coordinates of the device's installation point, associated with a unique identification code that enables quick identification and precise localization.

15. Device according to claim 1, **characterized by** a communication system configurable also in mesh network mode, designed to:
• connect with other identical or compatible devices, forming a distributed network to extend Wi-Fi signal coverage;
• dynamically optimize data transmission by selecting the best path to reduce latency and improve service quality;
• support network redundancy, ensuring continuity of connection even in the event of failure of one or more nodes in the network;
• optimize energy consumption.
